# EUROPEAN PATENT APPLICATION

(11) **EP 1 126 465 A2**
(43) Date of publication of application: **22.08.2001**
(21) Application number: 01101045.1
(22) Date of filing: 18.01.2001
(51) Int. Cl.: G11B 33/04

(54) **Container for disk-shaped items, particularly compact discs**

(30) Priority: 24.01.2000 IT MI200032
(71) Applicant: Tomasoni, Sergio, 20136 Milano (IT); Magnoni, Davide, 20081 Abbiategrasso (Milano) (IT)
(72) Inventor: Tomasoni, Sergio, 20136 Milano (IT); Magnoni, Davide, 20081 Abbiategrasso (Milano) (IT)
(74) Representative: Forattini, Amelia

(57) **Abstract**

A container for disk-shaped items, particularly for compact discs, comprises a body (2) which is formed monolithically and is divided into a first half-portion (4) and a second half-portion (5) which can be mutually superimposed so as to form at least one closed or superimposed position for containing a disk-like item. The container comprises a means (8, 9) for locking the half-portions in the closed position and for releasing the half-portions from the closed or superimposed position by virtue of the elastic deformation of the body.

## Description

The present invention relates to a container for disk-shaped items, particularly for compact discs.

Conventional containers for CDs are usually provided as a parallelepipedal enclosure which opens along one edge and is made of three rigid plastic parts: two are generally transparent and allow closure and opening by rotating about a common axis, and the third part, applied to one of the hinged parts, is shaped so as to accommodate the disc. The shaped part is centrally provided with a circular raised portion on which the central hole of the disc is fitted with a slight pressure, thus locking the disc; to release the disc it is sufficient to press on the same region and lift the disc. The hinged parts are molded so as to form, at the ends of the common axis, small pivots and respective seats, thus allowing the parts to rotate with respect to each other.

These containers have the drawback that the pivots that ensure opening and closure tend to break, because of wear or while handling them.

Conventional containers also have the drawback of being expensive and relatively bulky and heavy.

Other conventional containers are simply constituted by an envelope-like enclosure whose thickness is comparable to the thickness of the disk-like item; the enclosure is generally made of cardboard or flexible plastics and is open on one side, and the disk-like item is inserted therein.

These containers have the drawback that they are deformable and do not offer adequate protection to the disk. Moreover, they are not particularly interesting from the aesthetic point of view.

The aim of the present invention is to provide a container which overcomes the drawbacks of the cited prior art.

An important object of the invention is to provide a compact container adapted to contain compact discs.

Another object of the invention is to provide a compact-disc container which ensures adequate protection over time.

Another object of the invention is to provide a container which has relatively low costs.

This aim and these and other objects which will become better apparent hereinafter are achieved by a container for disk-shaped items, particularly for compact discs, characterized in that it comprises a body which is formed monolithically and is divided into a first half-portion and a second half-portion which can be mutually superimposed so as to form at least one closed or superimposed position for containing a disk-like item, at least one of the half-portions comprising a profile, along its perimetric edge, said profile being substantially perpendicular to the main plane of the half-portion in order to space the superimposed half-portion so as to form a containment space for the disk-like item, the body comprising a locking means for locking the half-portions in the closed position, said locking means being actuated in order to lock the half-portions in the closed position and release the half-portions from the closed or superimposed position by means of the elastic deformation of at least one deformable portion of the body.

Further characteristics and advantages of the present invention will become better apparent from the following detailed description of a container according to the invention, illustrated only by way of non-limitative example in the accompanying drawings, wherein:
Figure 1 is a perspective view of the container according to the invention, shown in the open position;
Figure 2 is a perspective view of the container, shown in the closed position;

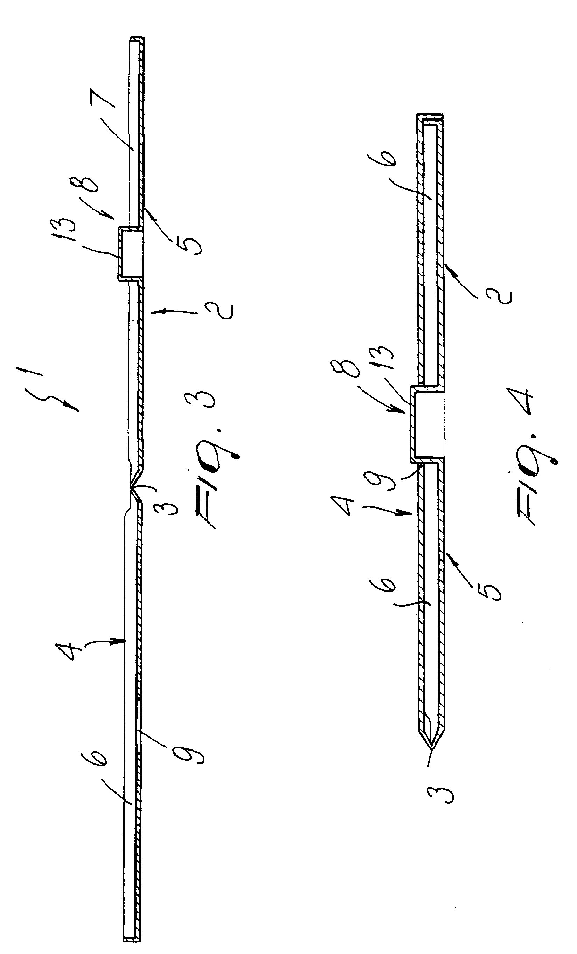

Figure 3 is a sectional side view of the container according to the invention, shown in the open position;
Figure 4 is a sectional side view of the container, shown in the closed position;
Figure 5 is a perspective view of two containers coupled to form a double container;
Figure 6 is a plan view of the container, shown containing a compact disc.

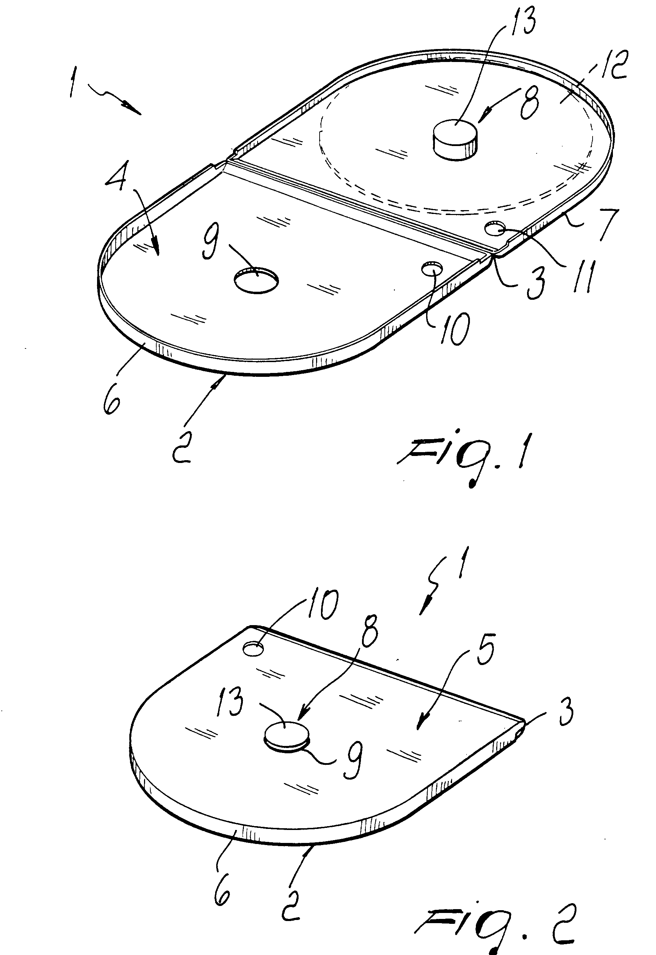

With reference to the figures, the container according to the invention, generally designated by the reference numeral 1, comprises a body 2 formed monolithically and by injection-molding by using a semirigid plastic material. The body 2 is divided, along a hinge line 3, into two half-portions, namely a first half-portion 4 and a second half-portion 5, which can be superimposed so as to form a closed or superimposed position (shown in Figures 2, 4, 5 and 6). The first half-portion 4 has, along its perimetric edge, a profile 6 which is substantially perpendicular to the main plane of the half-portion, so as to form a containment space when the half-portions are superimposed. Preferably, the second half-portion 5 also has a similar perpendicular profile 7 which, in the closed or superimposed position, couples to the profile 6 of the first half-portion 4. The surface of the first half-portion 4 is slightly larger than the surface of the second half-portion 5, so that when the container is closed the profile 7 can slide in contact with the profile 6 and inside it. The second half-portion 5 has a protruding member 8 at its center, substantially at the central hole of a compact disc to be inserted in the container. The protruding member 8 is adapted to be inserted in the hole of a compact disc 12 contained in the container. In the closed or superimposed position, the protruding member 8 engages a seat 9 which is formed in the first half-portion 4, providing a snap-together locking. The seat 9 is constituted by a through hole and the protruding member is constituted by a cylindrical member 8.

The first half-portion 4 has a first opening 10 and the second half-portion 5 has a second opening 11. The openings 10 and 11 are arranged so as to be aligned, when the container is in the closed or superimposed position shown in Figures 2, 5 and 6, in order to form a channel which passes through the container when it is in the closed position. For this purpose, the openings 10 and 11 are arranged in a region which is not occupied by the compact disc 12 inside the container.

The through channel formed by the openings 10 and 11 can be used for a support, such as a cable or a bar, for a plurality of containers.

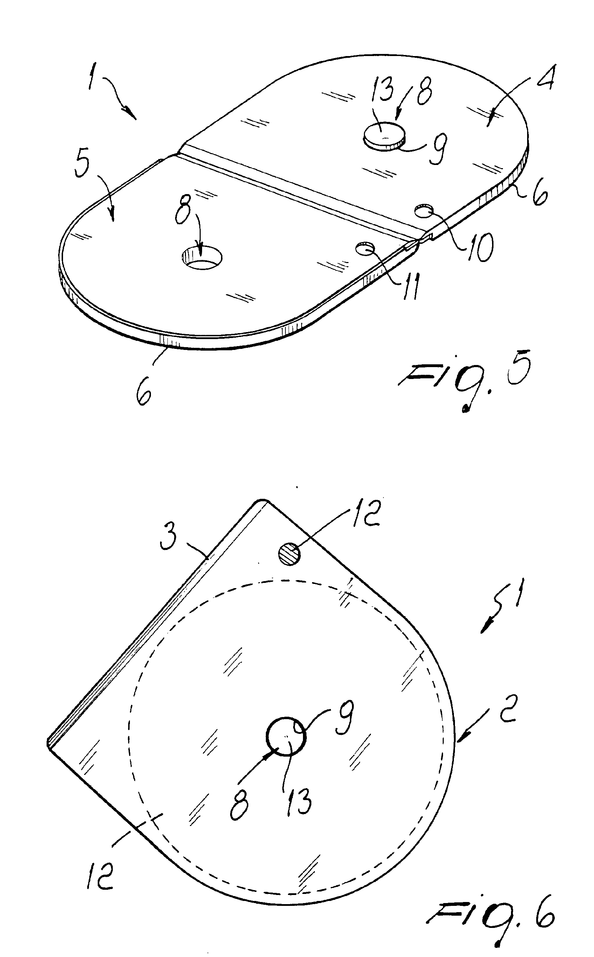

As shown in Figure 5, it is possible to couple two identical containers in order to form a double container for storing two CDs.

Operation of the container is very simple. It is sufficient to place a compact disc 12 in the second half-portion, inserting the protruding member 8 in the hole of the CD, and close by folding along one edge the first half-portion 4 on the second half-portion 5, until, by applying a slight pressure, the protruding member 8 fits in the seat 9, passing through it. In order to open the container, it is sufficient to press in the opposite direction the protruding portion 13 of the protruding member 8, which can be accessed through the seat 9 from the side of the first half-portion 4, holding the container by the edge and deforming it elastically.

The structure according to the invention is compact, since its dimensions, in terms of surface extension and in terms of thickness, are comparable to those of the disk-like item.

Another advantage of the container according to the invention is that it is formed monolithically, with an evident saving from the point of view of manufacturing costs.

Another advantage of the container according to the invention is that it is lightweight and at the same time sturdy; these characteristics make it suitable for various uses.

The dimensions and the weight of the container according to the invention make it suitable, for example, to store CDs or CD-ROMs, for example when enclosed in magazines and publications in general, or for mailing.

In practice it has been observed that the invention achieves the intended aim and objects.

The materials and the dimensions may of course vary according to requirements and to the state of the art.

## Claims

1. A container for disk-shaped items, particularly for compact discs, characterized in that it comprises a body which is formed monolithically and is divided into a first half-portion and a second half-portion which can be mutually superimposed so as to form at least one closed or superimposed position for containing a disk-like item, at least one of said half-portions comprising a profile along its perimetric edge, said profile being substantially perpendicular to the main plane of said half-portion in order to space the superimposed half-portion so as to form a containment space for said disk-like item, said body comprising a locking means for locking the half-portions in the closed position, said locking means being actuated in order to lock the half-portions in the closed position and release the half-portions from the closed or superimposed position by means of the elastic deformation of at least one deformable portion of said body.

2. The container according to the invention 1, characterized in that said deformable portion is comprised in a first one of said half-portions.

3. The container according to claim 1 or 2, characterized in that said deformable portion comprises a seat and in that said second half-portion comprises a protruding member adapted to engage said seat in said first half-portion, the engagement and disengagement of said protruding member in said seat being obtained by elastic deformation of said deformable portion.

4. The container according to one or more of the preceding claims, characterized in that said seat is a through hole and said protruding member is a cylindrical member adapted to pass through said through hole by elastic deformation of said first half-portion.

5. The container according to one or more of the preceding claims, characterized in that said first half-portion has a first opening and said second half-portion has a second opening, said first and second openings being arranged so as to be aligned in said closed or superimposed position in order to form a channel which passes through said container in said closed position.

6. The container according to one or more of the preceding claims, characterized in that said first and second half-portions can be superimposed by closing said container along one edge by folding it along a hinge line dividing said body into said first and second half-portions.
